# EUROPÄISCHE PATENTANMELDUNG

(11) **EP 4 481 954 A1**
(43) Veröffentlichungstag der Anmeldung: **25.12.2024**
(21) Anmeldenummer: 24176018.0
(22) Anmeldetag: 15.05.2024
(51) Int. Cl.: H01R 13/46, G06K 19/06, H01R 13/629, H01R 43/26, H01R 13/641

(54) **SICHERUNGSVORRICHTUNG MIT ANZEIGEELEMENT UND KONTRASTELEMENT**

(30) Priorität: 06.06.2023 DE 102023114792
(71) Anmelder: Lisa Dräxlmaier GmbH, 84137 Vilsbiburg (DE)
(72) Erfinder: Neumayer, Franziska, 84144 Geisenhausen (DE); Wimmer, Stefan, 84098 Hohenthann (DE); Wilhelm, Sebastian, 66625 Nohfelden (DE)

(57) **Zusammenfassung**

Die Offenbarung betrifft eine Sicherungsvorrichtung (100) zur Sicherung einer Verriegelung eines Verriegelungselements (110). Die Sicherungsvorrichtung (100) umfasst: ein Verriegelungselement (110), das von einer ersten Verriegelungsstellung (111) in eine zweite Verriegelungsstellung (112) bewegbar ist, wobei das Verriegelungselement (110) in der zweiten Verriegelungsstellung (112) eine Verriegelung bewirkt; ein Anzeigeelement (120) mit einem Erkennungsmerkmal (200) zum Anzeigen einer Information; und ein Kontrastelement (212) mit einer Kontrastfläche (213), die einen Kontrast zu dem Erkennungsmerkmal (200) bildet, so dass das Erkennungsmerkmal (200) erkennbar ist, wenn es über der Kontrastfläche (213) angeordnet ist und nicht erkennbar ist, wenn es nicht über der Kontrastfläche (213) angeordnet ist; wobei in der ersten Verriegelungsstellung (111) das Erkennungsmerkmal (200) nicht über der Kontrastfläche (213) angeordnet ist, so dass es nicht erkennbar ist; und wobei in der zweiten Verriegelungsstellung (112) das Erkennungsmerkmal (200) über der Kontrastfläche (213) angeordnet ist, so dass es erkennbar ist.

## Beschreibung

### Technisches Gebiet

Die vorliegende Erfindung betrifft eine Sicherungsvorrichtung mit Anzeigeelement und Kontrastelement. Die Sicherungsvorrichtung dient zur Sicherung einer Verriegelung eines Verriegelungselements bzw. zur "Steckerpositions-Kontrolle" oder "Connector Position Assurance (CPA)" und ist zur Sicherung einer Verriegelung eines Steckergehäuses an einem Gegen-Steckergehäuse einsetzbar. Insbesondere betrifft die Erfindung eine CPA mit Kontrastfläche.

### Stand der Technik

CPAs ("Connector Position Assurance") sollen verhindern, dass sich ein an einem Gegen-Steckergehäuse verrastetes Steckergehäuse unbeabsichtigt von dem Gegen-Steckergehäuse löst, was beispielsweise aufgrund von Vibrationen, temperaturbedingter Ausdehnung oder Schrumpfung, das Ziehen an einem im Steckergehäuse untergebrachten Kabel oder andere mechanische Einwirkungen passieren kann. Die CPA ist dafür zuständig als letztes zu bedienendes Element den Stecker mit seinem Gegenstück zu verriegeln. Um hier ein sicheres Verriegeln zu gewährleisten, wird gefordert, dass der finale Zustand der Verriegelung durch ein scanbares Element erfasst wird und dieses Element nur lesbar sein darf, wenn die CPA final geschlossen ist.

### Beschreibung der Erfindung

Eine Aufgabe der Erfindung ist es daher, eine geeignete Vorrichtung zu schaffen, mit der zuverlässig erkannt werden kann, ob eine Verriegelung vorliegt oder nicht, insbesondere für Stecker, bei denen eine CPA-Verriegelung erforderlich ist.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Durch die Anforderung, dass der Stecker einen hohen Automatisierungsgrad in Herstellung und Konfektionierung benötigt, ist die Verwendung eines scanbaren Elementes zwingend notwendig als Kontrollfunktion. Die hier vorgestellte Erfindung betrifft eine Sicherungsvorrichtung umfassend ein Anzeigeelement mit einem Erkennungsmerkmal und ein Kontrastelement, wobei ein Kontrast des Erkennungsmerkmals durch das Kontrastelement verändert wird und das Anzeigeelement damit als scanbares Element genutzt werden kann, um eine zuverlässige Kontrolle des Stecker-Herstellungsprozesses zu gewährleisten und ein Scannen des Stecksystems im zusammengebauten Zustand zu ermöglichen. Die hier vorgestellte Lösung kann auf verschiedene Stecksysteme angewendet werden und lässt sich leicht von einem Stecksystem auf ein anderes Stecksystem adaptieren.

Hauptmerkmal der erfinderischen Lösung ist, dass die Erfassbarkeit des Anzeigeelements über den Kontrast gesteuert wird, beispielsweise durch eine weiße Fläche auf der CPA, die unter das zu erfassende Merkmal (Erkennungsmerkmal) geschoben wird. Das zu erfassende Element befindet sich auf einer transparenten Fläche. Das Element und die darunterliegende Fläche haben die gleiche oder ähnliche Farbe; somit ist das zu erfassende Element nicht erkennbar. Allgemein ist es nicht erkennbar, da der Kontrast zu gering ist, beispielsweise schwarz zu dunkelgrau oder ähnlich. Auf der CPA befindet sich eine Fläche mit einer Kontrastfarbe. Durch Betätigung der CPA wird die Kontrastfläche zwischen transparenter Fläche und darunterliegender Fläche geschoben. Dadurch entsteht ein Kontrast, der ein Erfassen möglich macht.

Gemäß einem ersten Aspekt wird die oben beschriebene Aufgabe gelöst durch eine Sicherungsvorrichtung zur Sicherung einer Verriegelung eines Verriegelungselements, wobei die Sicherungsvorrichtung Folgendes umfasst: ein Verriegelungselement, das von einer ersten Verriegelungsstellung in eine zweite Verriegelungsstellung bewegbar ist, wobei das Verriegelungselement in der zweiten Verriegelungsstellung eine Verriegelung bewirkt; ein Anzeigeelement mit einem Erkennungsmerkmal zum Anzeigen einer Information; und ein Kontrastelement mit einer Kontrastfläche, die einen Kontrast zu dem Erkennungsmerkmal bildet, so dass das Erkennungsmerkmal erkennbar ist, wenn es über der Kontrastfläche angeordnet ist und nicht erkennbar ist, wenn es nicht über der Kontrastfläche angeordnet ist; wobei in der ersten Verriegelungsstellung des Verriegelungselements das Erkennungsmerkmal nicht über der Kontrastfläche angeordnet ist, so dass es nicht erkennbar ist; und wobei in der zweiten Verriegelungsstellung des Verriegelungselements das Erkennungsmerkmal über der Kontrastfläche angeordnet ist, so dass es erkennbar ist.

Beim Übergang von der ersten Verriegelungsstellung in die zweite Verriegelungsstellung und umgekehrt, führt das Erkennungsmerkmal eine Relativbewegung zu der Kontrastfläche aus, so dass es, wenn es über der Kontrastfläche angeordnet ist, erkennbar ist, und wenn es nicht über der Kontrastfläche angeordnet ist, nicht erkennbar ist.

Die Information kann beispielsweise eine vorhandene oder nicht vorhandene Verriegelung durch das Verriegelungselement anzeigen. Aber es muss nicht zwingend eine Verriegelung angezeigt werden. Auf dem Erkennungsmerkmal können sich allgemeine Informationen befinden. Die Tatsache, dass das Erkennungsmerkmal erst in Endstellung, d.h. der zweiten Verriegelungsstellung gescannt/gelesen werden kann, ist die "Sicherung".

Eine solche Sicherungsvorrichtung bietet den technischen Vorteil, dass ein sicheres und zuverlässiges Erkennen einer Verriegelung möglich ist. Das Anzeigeelement lässt sich über ein scanbares Element erfassen, so dass eine zuverlässige automatische Erkennung der Stellung des Verriegelungselements möglich ist. Damit lässt sich insbesondere eine automatische Erfassung des Zustands von Steckern, bei denen eine CPA-Verriegelung erforderlich ist, durchführen. Die Sicherungsvorrichtung erfüllt somit die Anforderungen, die an eine CPA-Verriegelung gestellt werden.

Das Erkennungsmerkmal kann beispielsweise ein Code sein, zum Beispiel ein eindimensionaler oder mehrdimensionaler Code oder ein Piktogramm oder ein Zeichen oder eine Informationsanzeige.

Gemäß einer beispielhaften Ausführungsform der Sicherungsvorrichtung ist das Erkennungsmerkmal in beiden Verriegelungsstellungen des Verriegelungselements nicht verdeckt und bleibt stets sichtbar.

Dies bietet den technischen Vorteil, dass keine Abdeckung des Anzeigeelements mit dem Erkennungsmerkmal notwendig ist, um den gewünschten Effekt der Nicht-Erkennbarkeit zu erzielen. Die Veränderung im Kontrast des Erkennungsmerkmals reicht bereits aus, um das Erkennungsmerkmal unkenntlich zu machen, so dass es von einem scanbaren Element nicht mehr erfassbar bzw. erkennbar ist.

Gemäß einer beispielhaften Ausführungsform der Sicherungsvorrichtung weist das Anzeigeelement eine transparente Fläche auf, auf welcher das Erkennungsmerkmal aufgebracht ist; wobei die transparente Fläche mit dem Erkennungsmerkmal in der zweiten Verriegelungsstellung des Verriegelungselements über der Kontrastfläche angeordnet ist, so dass das Erkennungsmerkmal erkennbar ist.

Dies bietet den technischen Vorteil, dass das Erkennungsmerkmal auf einfache Weise auf die transparente Fläche aufgedruckt oder sonst wie aufgebracht sein kann. Damit wird ein Bewegen der Kontrastfläche unter die transparente Fläche einfach realisierbar.

Gemäß einer beispielhaften Ausführungsform der Sicherungsvorrichtung ist das Anzeigeelement mit dem Erkennungsmerkmal in der ersten Verriegelungsstellung des Verriegelungselements über einer Kontrastminderungsfläche angeordnet, welche eine Erkennbarkeit des Erkennungsmerkmals verhindert.

Dies bietet den technischen Vorteil, dass die Kontrastminderungsfläche den Kontrast des Erkennungsmerkmals entsprechend reduziert, dass eine Erkennbarkeit nicht mehr möglich ist, so dass eine Unterscheidbarkeit der Zustände "Verriegelung" und "Entriegelung" realisierbar wird.

Gemäß einer beispielhaften Ausführungsform der Sicherungsvorrichtung bewegt sich die Kontrastfläche des Kontrastelements beim Bewegen des Verriegelungselements von der ersten Verriegelungsstellung in die zweite Verriegelungsstellung zwischen die Kontrastminderungsfläche und das Erkennungsmerkmal, so dass das Erkennungsmerkmal in der zweiten Verriegelungsstellung erkennbar ist.

Dies bietet den technischen Vorteil, dass sich der Kontrast des Erkennungsmerkmals leicht über eine Betätigung des Verriegelungselements steuern lässt. Beim Betätigen des Verriegelungselements durch Bewegen in die zweite Verriegelungsstellung bewegt sich die Kontrastfläche mit und erzeugt damit den Kontrast zum Erkennungsmerkmal, so dass ein Vorliegen einer Verriegelungswirkung sicher erkannt werden kann.

Gemäß einer beispielhaften Ausführungsform der Sicherungsvorrichtung umfasst das Erkennungsmerkmal einen Code mit Elementen in einer ersten, z.B. hellen Farbe und Elementen in einer zweiten, z.B. dunklen Farbe; wobei die Elemente in der hellen Farbe nicht erkennbar sind, wenn der Code über der Kontrastminderungsfläche angeordnet ist. Der Code kann ein eindimensionaler oder mehrdimensionaler Code sein, zum Beispiel ein Barcode, ein DMC, ein QR-Code, ein Hologramm, etc.

Dies bietet den technischen Vorteil, dass das Anzeigeelement Informationen übertragen kann, welche durch den Code codiert sind, beispielsweise Informationen über die Art der Verriegelung, die Bezeichnung der Bauteile, etc. Dadurch, dass der Code Elemente einer ersten, z.B. hellen Farbe und Elemente einer zweiten, z.B. dunklen Farbe umfasst, lässt sich der Kontrast einfach steuern. Liegt die Kontrastminderungsfläche unter dem Code, so sind die Elemente der ersten, z.B. hellen Farbe nicht erkennbar; liegt die Kontrastfläche unter dem Code, so sind beide Elemente gut zu erkennen.

Gemäß einer beispielhaften Ausführungsform der Sicherungsvorrichtung sind sowohl die Elemente in der ersten, z.B. hellen Farbe als auch die Elemente in der zweiten, z.B. dunklen Farbe des Codes erkennbar, wenn die Kontrastfläche sich zwischen der Kontrastminderungsfläche und dem Code befindet.

Dies bietet den technischen Vorteil, dass der Code einen starken Kontrast zwischen den Elementen der ersten, z.B. hellen Farbe und den Elementen der zweiten, z.B. dunklen Farbe aufweist, so dass er leicht von einem Leseelement eingelesen werden kann.

Gemäß einer beispielhaften Ausführungsform der Sicherungsvorrichtung umfasst das Erkennungsmerkmal einen Data Matrix Code, DMC.

Der Data Matrix Code ist einer der bekanntesten 2D-Codes und lässt sich für dauerhafte und robuste Direktbeschriftungen einsetzen. Der DMC ist in der Größe variabel und lässt somit eine Vielzahl von Symbol-Elementen zu.

Gemäß einer beispielhaften Ausführungsform der Sicherungsvorrichtung ist das Erkennungsmerkmal erkennbar, wenn es sich über der Kontrastfläche befindet. Es kann dann beispielsweise mit einem Lesegerät gelesen werden oder durch die Augen des Nutzers erkannt werden.

Dies bietet den technischen Vorteil, dass der Zustand des Verriegelungselements sich sicher und zuverlässig mit einem Lesegerät, beispielsweise einem Scanner, bestimmen lässt. Damit kann eine automatisierte Montage von Stecksystemen effizient kontrolliert werden. Auch eine visuelle Erkennbarkeit ist realisierbar.

Gemäß einer beispielhaften Ausführungsform der Sicherungsvorrichtung ist die Sicherungsvorrichtung ausgebildet, eine Steckerpositions-Sicherung (CPA) zur Sicherung einer Verriegelung eines Steckergehäuses an einem Gegen-Steckergehäuse vorzunehmen.

Dies bietet den technischen Vorteil, dass der Zustand der CPA sich sicher durch ein scanbares Element erfassen lässt, welches nur dann lesbar ist, wenn die CPA final geschlossen ist.

Gemäß einer beispielhaften Ausführungsform der Sicherungsvorrichtung umfasst die Sicherungsvorrichtung ferner: ein Spannelement zum Einspannen des Steckergehäuses in das Gegen-Steckergehäuse, wobei das Spannelement von einer offenen Spannelementstellung, in der das Steckergehäuse in das Gegen-Steckergehäuse einführbar ist, in eine geschlossene Spannelementstellung, in der das Steckergehäuse elektrisch kontaktierend mit dem Gegen-Steckergehäuse fixiert ist, bewegbar ist; wobei das Verriegelungselement an dem Spannelement angebracht ist und ausgebildet ist, das Spannelement zu verriegeln oder zu entriegeln. Wie oben beschrieben, kann das Anzeigeelement eine Information anzeigen, beispielsweise eine Information über eine Verriegelung des Spannelements durch das Verriegelungselement oder auch jede andere Information.

Dies bietet den technischen Vorteil, dass das Anzeigeelement zuverlässig eine Verriegelung des Spannelements, beispielsweise eines Bügels, anzeigt, so dass der Zustand des Spannelements sich beispielsweise mit einem scanbaren Element effizient erfassen lässt.

Gemäß einer beispielhaften Ausführungsform der Sicherungsvorrichtung ist das Verriegelungselement in der geschlossenen Spannelementstellung von der ersten Verriegelungsstellung in die zweite Verriegelungsstellung bewegbar und ist ausgebildet, in der zweiten Verriegelungsstellung das Spannelement in der geschlossenen Spannelementstellung zu verriegeln, und in der ersten Verriegelungsstellung das Spannelement für eine Bewegung in die offene Spannelementstellung zu entriegeln.

Dies bietet den technischen Vorteil, dass ein sicheres Verbinden des Steckergehäuses mit dem Gegen-Steckergehäuse über das Spannelement gewährleistet ist. Die Sicherungsvorrichtung erfüllt somit die Anforderungen, die an eine CPA-Verriegelung gestellt werden.

Gemäß einer beispielhaften Ausführungsform der Sicherungsvorrichtung sind das Erkennungsmerkmal und das Kontrastelement an dem Spannelement angebracht, beispielsweise an einer Tafel des Spannelements;; und eine Bewegung des Verriegelungselements von der ersten Verriegelungsstellung in die zweite Verriegelungsstellung schiebt die Kontrastfläche unter das Erkennungsmerkmal, so dass das Erkennungsmerkmal in der zweiten Verriegelungsstellung lesbar ist.

Dies bietet den technischen Vorteil, dass das Anzeigeelement sicher und robust eine Information anzeigen kann. In der ersten Verriegelungsstellung befindet es sich nicht über der Kontrastfläche, so dass kein ausreichender Kontrast zum Erkennen des Erkennungsmerkmals vorliegt und keine Verriegelung durch ein scanbares Element erkannt werden kann. In der zweiten Verriegelungsstellung ist es über der Kontrastfläche angeordnet, so dass ein ausreichender Kontrast zum Erkennen des Erkennungsmerkmals vorliegt und eine Verriegelung durch das scanbare Element erkannt werden kann.

Gemäß einem zweiten Aspekt wird die oben beschriebene Aufgabe gelöst durch eine Steckverbindung mit einem Steckergehäuse und einem Gegen-Steckergehäuse, die über eine Sicherungsvorrichtung gemäß dem ersten Aspekt miteinander verbunden und gesichert sind.

Gemäß einem dritten Aspekt wird die oben beschriebene Aufgabe gelöst durch ein Sicherungssystem umfassend eine Sicherungsvorrichtung gemäß dem ersten Aspekt und ein Lesegerät, wobei das Lesegerät ausgebildet ist, das Erkennungsmerkmal des Anzeigeelements zu erfassen, wenn sich das Verriegelungselement in der zweiten Verriegelungsstellung befindet, um eine Verriegelung zu erkennen.

Gemäß einer beispielhaften Ausführungsform des Sicherungssystems ist das Lesegerät ausgebildet, das Erkennungsmerkmal des Anzeigeelements nur dann zu erfassen, wenn sich das Verriegelungselement in der zweiten Verriegelungsstellung befindet und nur in dieser Stellung eine korrekte Verriegelung zu erfassen.

### Kurze Figurenbeschreibung

Im Folgenden wird die Erfindung anhand von Ausführungsbeispielen und den Figuren näher beschrieben. Es zeigen:
- Fig. 1: eine schematische Darstellung der Zustände einer erfindungsgemäßen Sicherungsvorrichtung 100;
- Fig. 2a: eine Darstellung einer erfindungsgemäßen Sicherungsvorrichtung 100 gemäß einer Ausführungsform in der ersten Verriegelungsstellung 111, in der sich die Kontrastfläche 213 nicht unter dem Erkennungsmerkmal 200 befindet;
- Fig. 2b: eine Darstellung der erfindungsgemäßen Sicherungsvorrichtung 100 aus Figur 2a in der zweiten Verriegelungsstellung 112, in der sich die Kontrastfläche 213 unter dem Erkennungsmerkmal 200 befindet; und
- Fig. 3a: eine 3D-Darstellung einer Sicherungsvorrichtung 100 umfassend ein Verriegelungselement 110, ein Anzeigeelement 120 mit Erkennungsmerkmal, ein Kontrastelement 212 und ein Spannelement 300 in geöffneter Spannbügelstellung und nicht verriegelter CPA in der ersten Verriegelungsstellung 111, in der sich die Kontrastfläche 213 nicht unter dem Erkennungsmerkmal 200 befindet;
- Fig. 3b: eine 3D-Darstellung der Sicherungsvorrichtung 100 aus Figur 3a in der zweiten Verriegelungsstellung 112, in der sich die Kontrastfläche 213 unter dem Erkennungsmerkmal 200 befindet;
- Fig. 3c: eine Draufsicht auf die Sicherungsvorrichtung 100 aus Figur 3a in der ersten Verriegelungsstellung 111, in der sich die Kontrastfläche 213 nicht unter dem Erkennungsmerkmal 200 befindet; und
- Fig. 3d: eine Draufsicht auf die Sicherungsvorrichtung 100 aus Figur 3b in der zweiten Verriegelungsstellung 112, in der sich die Kontrastfläche 213 unter dem Erkennungsmerkmal 200 befindet.

Die Figuren sind lediglich schematische Darstellungen und dienen nur der Erläuterung der Erfindung. Gleiche oder gleichwirkende Elemente sind durchgängig mit den gleichen Bezugszeichen versehen.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

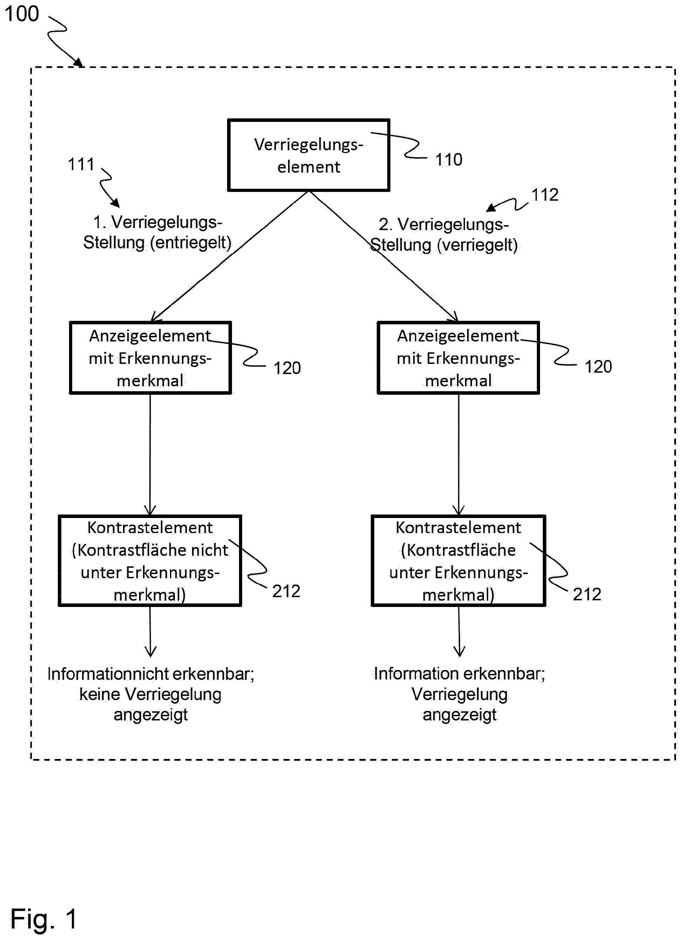

Fig. 1 zeigt eine schematische Darstellung der Zustände einer erfindungsgemäßen Sicherungsvorrichtung 100.

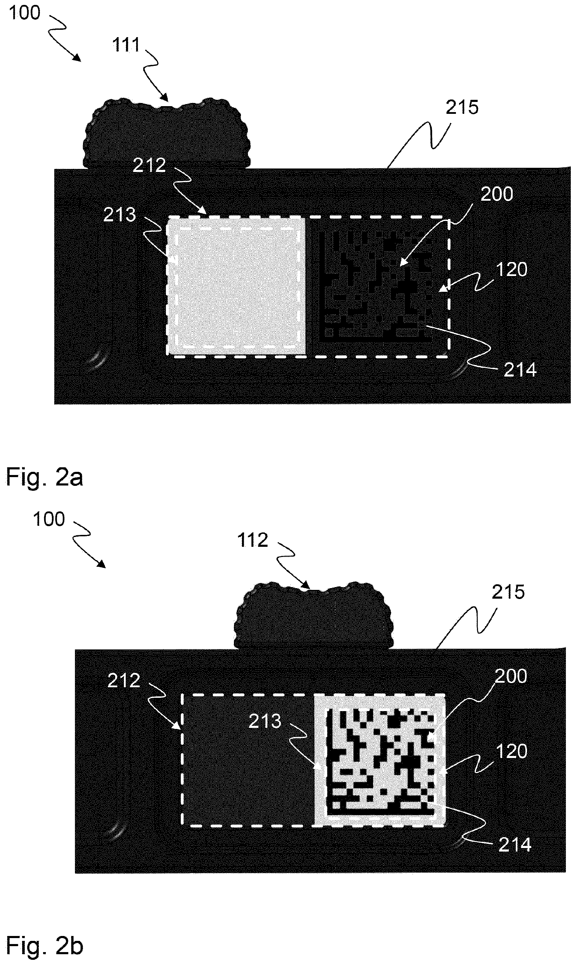

Die Sicherungsvorrichtung 100 dient zur Sicherung einer Verriegelung eines Verriegelungselements 110. Die Sicherungsvorrichtung 100 umfasst ein Verriegelungselement 110, ein Anzeigeelement 120 mit einem Erkennungsmerkmal 200 (siehe auch Figuren 2a und 2b) und ein Kontrastelement 212 mit einer Kontrastfläche 213.

Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung.

Das Anzeigeelement 120 mit dem Erkennungsmerkmal 200 (siehe Figuren 2a und 2b) dient zum Anzeigen einer Information, beispielsweise einer Information über ein Verriegelung durch das Verriegelungselement 110. Es kann jedoch auch jede andere Art von Information angezeigt werden. Wesentlich zur Erkennung des Verriegelungszustands ist dass die Information angezeigt oder nicht angezeigt wird.

Die Kontrastfläche 213 des Kontrastelements 212 bildet einen Kontrast zu dem Erkennungsmerkmal 200, so dass das Erkennungsmerkmal 200 erkennbar ist, wenn es über der Kontrastfläche 213 angeordnet ist und nicht erkennbar ist, wenn es nicht über der Kontrastfläche 213 angeordnet ist.

Dabei ist in der ersten Verriegelungsstellung 111 des Verriegelungselements 110 das Erkennungsmerkmal nicht über der Kontrastfläche 213 angeordnet, so dass es nicht erkennbar ist. In der zweiten Verriegelungsstellung 112 des Verriegelungselements 110 dagegen ist das Erkennungsmerkmal 200 über der Kontrastfläche 213 angeordnet, so dass es erkennbar ist.

Das Erkennungsmerkmal 200 ist in beiden Verriegelungsstellungen 111, 112 des Verriegelungselements 110 nicht verdeckt und bleibt stets sichtbar, wie genauer unten zu den Figuren 2a und 2b dargestellt.

Eine beispielhafte Ausführung des Erkennungsmerkmals 200 und des Kontrastelements 212 ist in den Figuren 2a und 2b näher dargestellt und beschrieben.

Die Figuren 2a und 2b zeigen Darstellungen einer erfindungsgemäßen Sicherungsvorrichtung 100 gemäß einer beispielhaften Ausführungsform in der ersten Verriegelungsstellung (Figur 2a), in der sich die Kontrastfläche 213 nicht unter dem Erkennungsmerkmal 200 befindet, und in der zweiten Verriegelungsstellung (Figur 2b), in der sich die Kontrastfläche 213 unter dem Erkennungsmerkmal 200 befindet.

Die Sicherungsvorrichtung 100 in Figur 2a und Figur 2b entspricht der oben zu Figur 1 beschriebenen Sicherungsvorrichtung, wobei in Figur 2a und Figur 2b die Struktur dieser Sicherungsvorrichtung 100 näher dargestellt ist.

Wie bereits oben zu Figur 1 beschrieben, dient die Sicherungsvorrichtung 100 zur Sicherung einer Verriegelung eines Verriegelungselements 110. Die Sicherungsvorrichtung 100 umfasst ein Verriegelungselement 110, ein Anzeigeelement 120 mit Erkennungsmerkmal und ein Kontrastelement 212, wie in den Figuren 2a und 2b dargestellt.

Das Verriegelungselement 110 ist von einer ersten Verriegelungsstellung 111 in eine zweite Verriegelungsstellung 112 bewegbar und bewirkt in der zweiten Verriegelungsstellung 112 eine Verriegelung. In Figur 2a ist das Verriegelungselement 110 in der ersten Verriegelungsstellung 111 dargestellt, in Figur 2b in der zweiten Verriegelungsstellung 112.

Das Anzeigeelement 120 mit dem Erkennungsmerkmal 200 (siehe Figuren 2a und 2b) dient zum Anzeigen einer Information, beispielsweise einer Information betreffend eine Verriegelung oder Nicht-Verriegelung durch das Verriegelungselement 110 oder jede andere Art von Information. In den Figuren 2a und 2b ist das Erkennungsmerkmal als zweidimensionaler Code mit weißen und schwarzen Elementen bzw. Pixeln dargestellt. Der 2D-Code ist beispielsweise ein DMC.

Die Kontrastfläche 213 des Kontrastelements 212 bildet einen Kontrast zu dem Erkennungsmerkmal 200, so dass das Erkennungsmerkmal 200 erkennbar ist, wenn es über der Kontrastfläche 213 angeordnet ist und nicht erkennbar ist, wenn es nicht über der Kontrastfläche 213 angeordnet ist.

Dabei ist in der ersten Verriegelungsstellung 111 des Verriegelungselements 110 (siehe Figur 2a) das Erkennungsmerkmal 200 nicht über der Kontrastfläche 213 angeordnet, sondern rechts davon, so dass es nicht erkennbar ist. In der zweiten Verriegelungsstellung 112 des Verriegelungselements 110 dagegen ist das Erkennungsmerkmal 200 über der Kontrastfläche 213 angeordnet, so dass es erkennbar ist.

Das Erkennungsmerkmal 200 ist in beiden Verriegelungsstellungen 111, 112 des Verriegelungselements 110 nicht verdeckt und bleibt stets sichtbar, wie aus den Figuren 2a und 2b ersichtlich.

Das Anzeigeelement 120 weist eine transparente Fläche 214 auf, auf welcher das Erkennungsmerkmal 200, hier der 2D-Code 200, aufgebracht ist. Die transparente Fläche 214 mit dem Erkennungsmerkmal 200 bzw. dem 2D-Code 200 ist in der zweiten Verriegelungsstellung 112 des Verriegelungselements 110 über der Kontrastfläche 213 angeordnet, so dass das Erkennungsmerkmal 200 erkennbar ist, wie in Figur 2b zu sehen.

Wie in Figur 2a dargestellt, ist das Anzeigeelement 120 mit dem Erkennungsmerkmal 200, hier dem 2D-Code 200, in der ersten Verriegelungsstellung 111 des Verriegelungselements 110 über einer Kontrastminderungsfläche 215 angeordnet, welche eine Erkennbarkeit des Erkennungsmerkmals 200 verhindert. Die Kontrastminderungsfläche 215 kann beispielsweise eine dunkle Fläche oder eine schwarze Fläche sein, so dass das Erkennungsmerkmal 200 bzw. der 2D-Code 200 über dieser dunklen Fläche keinen ausreichenden Kontrast bildet, um erkannt zu werden. Die Kontrastminderungsfläche 215 mindert den Kontrast oder reduziert ihn so stark, dass das Erkennungsmerkmal 200 nicht mehr erkennbar ist.

Die Kontrastfläche 213 (hier im Beispiel die weiße Fläche 213) des Kontrastelements 212 bewegt bzw. schiebt sich beim Bewegen des Verriegelungselements 110 von der ersten Verriegelungsstellung 111 in die zweite Verriegelungsstellung 112 zwischen die Kontrastminderungsfläche 215 (hier im Beispiel die schwarze Fläche 215) und das Erkennungsmerkmal 200, so dass das Erkennungsmerkmal 200 in der zweiten Verriegelungsstellung 112 erkennbar ist (siehe Figur 2b).

Das Erkennungsmerkmal 200 kann beispielsweise einen Code mit Elementen in einer ersten Farbe (zum Beispiel einer hellen Farbe wie Weiß in diesem Beispiel) und Elementen in einer zweiten Farbe (zum Beispiel einer dunklen Farbe wie Schwarz in diesem Beispiel) umfassen. Die Elemente in der ersten Farbe (z.B. Weiß) sind nicht erkennbar, wenn der Code 200 über der Kontrastminderungsfläche 215 (in diesem Beispiel der schwarzen Fläche) angeordnet ist.

Sowohl die Elemente in der ersten Farbe als auch die Elemente in der zweiten Farbe des Codes 200 sind jedoch erkennbar, wenn die Kontrastfläche 213 sich zwischen der Kontrastminderungsfläche 215 und dem zwei-dimensionalen Code 200 befindet (siehe Figur 2b).

Wie in dem Beispiel der Figuren 2a und 2b veranschaulicht, kann das Erkennungsmerkmal 200 bzw. der 200 einen Data Matrix Code, DMC umfassen. Es kann sich beispielsweise auch um einen Barcode oder einen QR-Code oder ein Piktogramm oder um ein beliebiges Zeichen handeln.

Ein solcher Data Matrix Code besteht beispielsweise aus den folgenden Hauptkomponenten:
1) zwei Paare fester durchgehender und unterbrochener Kanten als Begrenzungslinien (Finder Pattern bzw. Positionsmarker). Die festen Begrenzungslinien dienen zur Abgrenzung. Sie werden für die Ausrichtung und Entzerrung des Data Matrix Codes verwendet, so dass jeder Lesewinkel möglich ist.
2) eine umlaufende Ruhezone (Quiet Zone). Diese leere Zone umgibt den Data Matrix Code. Sie enthält keinerlei Informationen oder Muster. Die Breite der Ruhezone beträgt mindestens eine Spalte bzw. eine Zeile (besser die vierfache Breite bzw. Höhe eines Moduls) und wird zur Abgrenzung von anderen optischen Bildelementen der Umgebung benötigt.
3) die den geschlossenen Kanten gegenüberliegende Ecke. Diese Ecke erlaubt das schnelle Erkennen der Codeschemata. Beim Codeschema ECC 200 mit einer geraden Anzahl Zeilen und Spalten ist das Element in der oberen rechten Ecke stets weiß. Bei den anderen genormten Codeschemata mit einer ungeraden Zeilen- und Spaltenzahl ist das Element in der oberen rechten Ecke stets schwarz.
4) die Ausrichtungsmuster (Alignment Pattern). Diese paarweise Kombination durchgehender und unterbrochener Linien in beiden Richtungen waagerecht und senkrecht erleichtern die Bildauswertung. Sie unterteilen große Datenfelder bei Codes mit mindestens 32 Modulen Kantenlänge in gleich große Teile.
5) der Datenbereich. Dieser Datenbereich enthält die eigentliche binäre Information in kodierter Form. Je nach Größe der Matrix definiert sich damit auch die Anzahl der möglichen Informationen.

Das Erkennungsmerkmal 200 bzw. der Code oder der DMC ist erkennbar und kann beispielsweise mit einem Lesegerät oder den Augen eines Betrachters gelesen werden, wenn es sich über der Kontrastfläche 213 befindet.

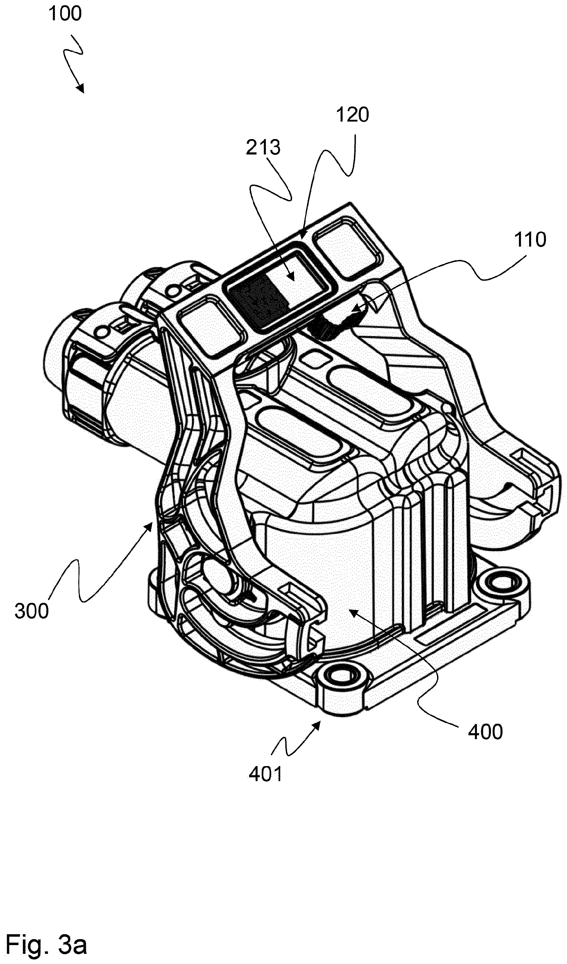

Die Sicherungsvorrichtung 100 kann ausgebildet sein, eine Steckerpositions-Sicherung (CPA) zur Sicherung einer Verriegelung eines Steckergehäuses 400 an einem Gegen-Steckergehäuse 401 vorzunehmen, wie unten zu den Figuren 3a bis 3d näher beschrieben.

Im Folgenden wird ein Beispiel mit CPA beschrieben, in dem das Erkennungsmerkmal 200 ein DMC ist, der schwarze und weiße Pixel umfasst, wie in den Figuren 2a und 2b dargestellt. Der DMC 200 wird erst lesbar, wenn die CPA unter diesen geschoben wird.

Die in diesem Fall schwarzen Konturen des DMC 200 sind auf dem transparenten Element 214 dargestellt. Dadurch, dass die Ebene (hier als Kontrastminderungsfläche 215 bezeichnet) unter dem transparenten Element 214 die gleiche Farbe hat wie die Konturen des DMC 200 ist dieser nicht erkennbar (siehe Figur 2a). Auf der CPA befindet sich ein weißes Element (hier als Kontrastfläche 213 bezeichnet). Dieses kann auch eine andere Farbe haben, es ist nur wichtig, dass der Kontrast in Endposition hoch genug ist. Durch Betätigen der CPA wird der DMC 200 in Endlage (hier als zweite Verriegelungsstellung 212 bezeichnet) erfassbar (siehe Figur 2b). Der DMC 200 ist in dieser Lösung immer sichtbar, er wird nicht verdeckt. Die Erfassbarkeit wird über den Kontrast gesteuert.

Mit der Sicherungsvorrichtung 100, wie oben zu den Figuren 1 bis 4b beschrieben, und einem Lesegerät kann ein Sicherungssystem implementiert werden, das den Zustand des Verriegelungselements 110 sicher bestimmen und zur weiteren Verarbeitung beispielsweise an eine Steuerung übertragen kann. Ein solches Sicherungssystem umfasst eine Sicherungsvorrichtung 100 wie oben beschrieben und ein Lesegerät. Das Lesegerät ist dabei ausgebildet, das Erfassungsmerkmal 200 des Anzeigeelements 120 zu erfassen, wenn sich das Verriegelungselement 110 in der zweiten Verriegelungsstellung befindet, d.h., wenn das Erfassungsmerkmal 200 des Anzeigeelements 120 erfassbar ist, um so eine Information und damit eine Verriegelung zu erkennen.

Das Lesegerät kann dabei ausgebildet sein, das Erfassungsmerkmal 200 nur dann zu erfassen, wenn sich das Verriegelungselement 110 in der zweiten Verriegelungsstellung 112 befindet und nur in dieser Stellung 112 eine korrekte Verriegelung zu erfassen.

Das Lesegerät kann die erfassten Informationen, beispielsweise den ausgelesenen 2D-Code bzw. DMC an eine Steuerung weitergeben, die dann bei fehlerhafter Erfassung einen Fehler anzeigen kann und entsprechende Schritte ausführen kann, um den Herstellungs- oder Konfektionierungsprozess zu steuern.

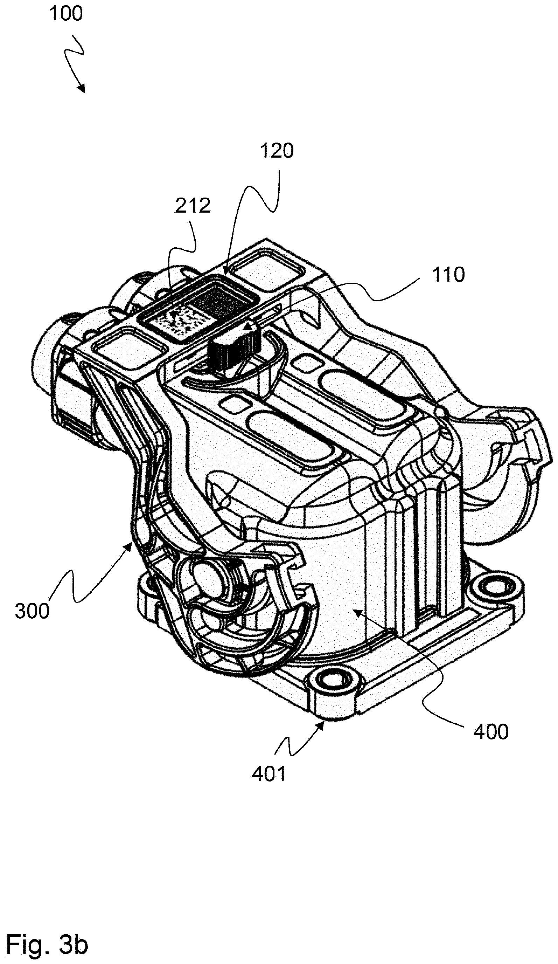

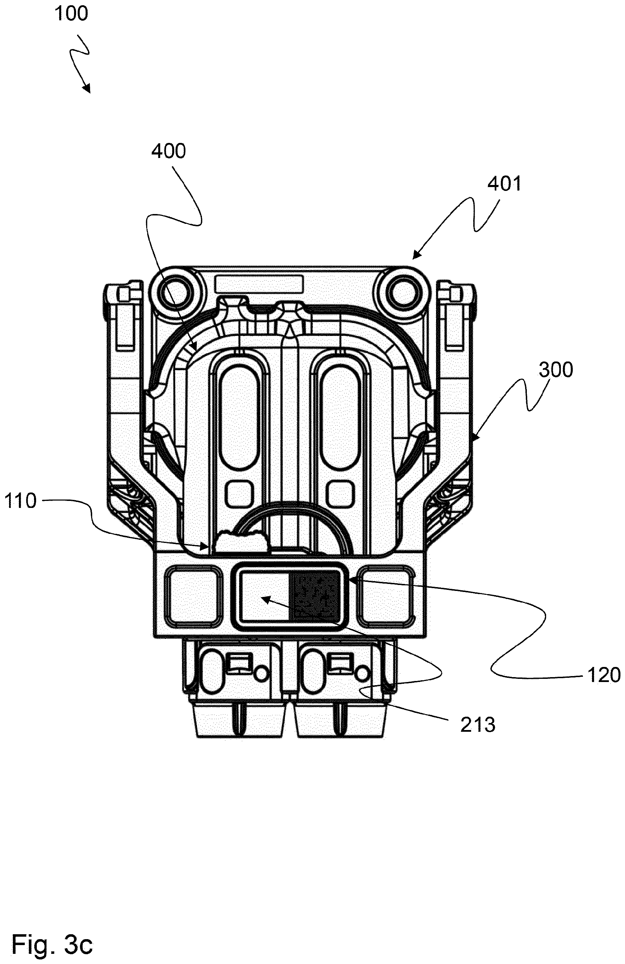

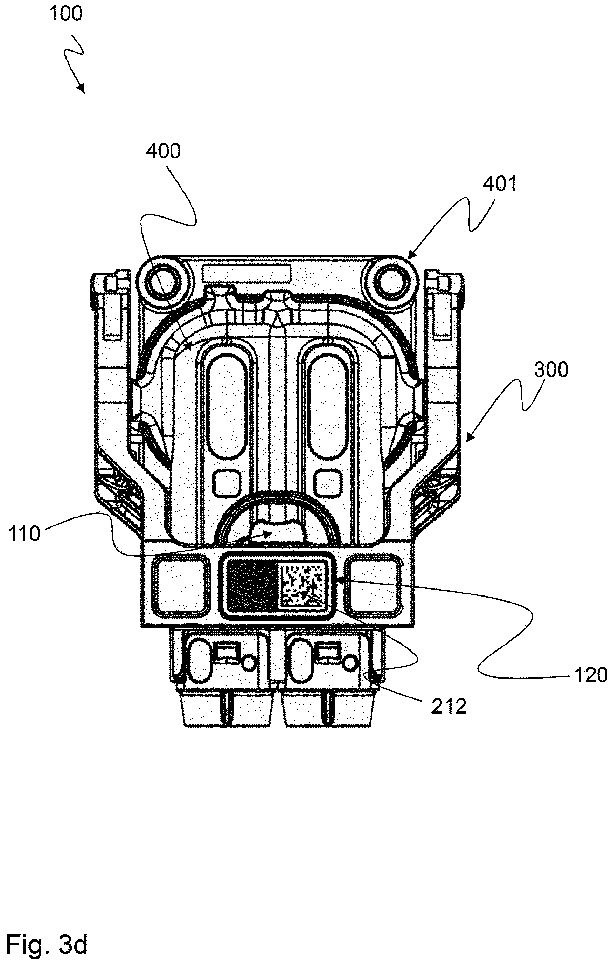

Die Figuren 3a, 3b, 3c und 3d zeigen 3D-Darstellungen und Draufsichten einer Sicherungsvorrichtung 100 umfassend ein Verriegelungselement 110, ein Anzeigeelement 120 mit Erkennungsmerkmal, ein Kontrastelement 212 und ein Spannelement 300 in geschlossener oder offener Spannbügelstellung. Das Verriegelungselement 110 kann von der ersten Verriegelungsstellung 111 in die zweite Verriegelungsstellung 112 bewegt werden.

Die Sicherungsvorrichtung 100 ist ausgebildet, eine Steckerpositions-Sicherung (CPA) zur Sicherung einer Verriegelung eines Steckergehäuses 400 an einem Gegen-Steckergehäuse 401 vorzunehmen.

Die Sicherungsvorrichtung 100 umfasst neben den bereits oben beschriebenen Verriegelungselement 110, Anzeigeelement 120 und Kontrastelement 212 auch ein Spannelement 300, beispielsweise einen Spannbügel, zum Einspannen des Steckergehäuses 400 in das Gegen-Steckergehäuse 401.

Das Spannelement 300 ist von einer offenen Spannelementstellung (siehe Figur 3a), in der das Steckergehäuse 400 in das Gegen-Steckergehäuse 401 einführbar ist, in eine geschlossene Spannelementstellung (siehe Figur 3b), in der das Steckergehäuse 400 elektrisch kontaktierend mit dem Gegen-Steckergehäuse 401 fixiert ist, bewegbar.

Das Verriegelungselement 110 ist an dem Spannelement 300 angebracht, beispielsweise an einer Tafel oder einem Mittenstück des Spannbügels 300, wie in den Figuren 3a bis 3d dargestellt, und ist ausgebildet, das Spannelement 300 zu verriegeln oder zu entriegeln.

Das Erkennungsmerkmal 200 des Anzeigeelements 120 zeigt eine Verriegelung des Spannelements 300 durch das Verriegelungselement 110 an. Das Erkennungsmerkmal 200 des Anzeigeelements 120 ist in den Figuren 3a bis 3d beispielhaft anhand des 2D-Codes dargestellt. Eine Verriegelung wird in den Figuren 3b und 3d angezeigt, während in den Figuren 3a und 3c keine Verriegelung angezeigt wird.

Das Verriegelungselement 110 ist in der geschlossenen Spannelementstellung von der ersten Verriegelungsstellung 111 (siehe Figuren 3a und 3c) in die zweite Verriegelungsstellung 112 (siehe Figuren 3b und 3d) bewegbar. Das Verriegelungselement 110 ist ausgebildet, in der zweiten Verriegelungsstellung 112 das Spannelement 300 in der geschlossenen Spannelementstellung zu verriegeln, und in der ersten Verriegelungsstellung 111 das Spannelement 300 für eine Bewegung in die offene Spannelementstellung zu entriegeln.

Das Anzeigeelement 120 mit dem Erkennungsmerkmal 200 ist an dem Spannelement 300 angebracht, wie in den Figuren 3a bis 3d zu sehen. Ferner ist das Kontrastelement 212 an dem Spannelement 300 angebracht, beispielsweise an einer Tafel oder Mittenstück des Spannbügels 300, wie in den Figuren 3a bid 3d zu sehen.

Bei einer Bewegung des Verriegelungselements 110 von der ersten Verriegelungsstellung 111 (Figuren 3a und 3c) in die zweite Verriegelungsstellung 112 (Figuren 3b und 3d) wird die Kontrastfläche 213 unter das Erkennungsmerkmal 200 geschoben bzw. das Erkennungsmerkmal schiebt sich über die Kontrastfläche 213, wie in den Figur 3b und 3d dargestellt, so dass das Erkennungsmerkmal 200 in der zweiten Verriegelungsstellung 112 lesbar bzw. erkennbar ist (Figuren 3b und 3d).

Die Figuren 3a bis 3d zeigen somit auch eine Steckverbindung mit einem Steckergehäuse 400 und einem Gegen-Steckergehäuse 401, die über die Sicherungsvorrichtung 100 wie oben beschrieben miteinander verbunden und gesichert sind.

### BEZUGSZEICHENLISTE

- 100: Sicherungsvorrichtung
- 110: Verriegelungselement
- 111: erste Verriegelungsstellung (entriegelt)
- 112: zweite Verriegelungsstellung (verriegelt)
- 120: Anzeigeelement
- 200: Erkennungsmerkmal
- 212: Kontrastelement
- 213: Kontrastfläche
- 214: transparente Fläche des Anzeigeelements
- 215: Kontrastminderungsfläche
- 300: Spannelement bzw. Spannbügel
- 400: Steckergehäuse
- 401: Gegen-Steckergehäuse

## Patentansprüche

1. Sicherungsvorrichtung (100) zur Sicherung einer Verriegelung eines Verriegelungselements (110), wobei die Sicherungsvorrichtung (100) Folgendes umfasst:
ein Verriegelungselement (110), das von einer ersten Verriegelungsstellung (111) in eine zweite Verriegelungsstellung (112) bewegbar ist, wobei das Verriegelungselement (110) in der zweiten Verriegelungsstellung (112) eine Verriegelung bewirkt;
ein Anzeigeelement (120) mit einem Erkennungsmerkmal (200) zum Anzeigen einer Information; und
ein Kontrastelement (212) mit einer Kontrastfläche (213), die einen Kontrast zu dem Erkennungsmerkmal (200) bildet, so dass das Erkennungsmerkmal (200) erkennbar ist, wenn es über der Kontrastfläche (213) angeordnet ist und nicht erkennbar ist, wenn es nicht über der Kontrastfläche (213) angeordnet ist;
wobei in der ersten Verriegelungsstellung (111) des Verriegelungselements (110) das Erkennungsmerkmal (200) nicht über der Kontrastfläche (213) angeordnet ist, so dass es nicht erkennbar ist; und
wobei in der zweiten Verriegelungsstellung (112) des Verriegelungselements (110) das Erkennungsmerkmal (200) über der Kontrastfläche (213) angeordnet ist, so dass es erkennbar ist.

2. Sicherungsvorrichtung (100) nach Anspruch 1,
wobei das Erkennungsmerkmal (200) in beiden Verriegelungsstellungen (111, 112) des Verriegelungselements (110) nicht verdeckt ist und stets sichtbar bleibt.

3. Sicherungsvorrichtung (100) nach Anspruch 1 oder 2,
wobei das Anzeigeelement (120) eine transparente Fläche (214) aufweist, auf welcher das Erkennungsmerkmal (200) aufgebracht ist;
wobei die transparente Fläche (214) mit dem Erkennungsmerkmal (200) in der zweiten Verriegelungsstellung (112) des Verriegelungselements (110) über der Kontrastfläche (213) angeordnet ist, so dass das Erkennungsmerkmal (200) erkennbar ist.

4. Sicherungsvorrichtung (100) nach einem der vorstehenden Ansprüche,
wobei das Anzeigeelement (120) mit dem Erkennungsmerkmal (200) in der ersten Verriegelungsstellung (111) des Verriegelungselements (110) über einer Kontrastminderungsfläche (215) angeordnet ist, welche eine Erkennbarkeit des Erkennungsmerkmals (200) verhindert.

5. Sicherungsvorrichtung (100) nach Anspruch 4,
wobei die Kontrastfläche (213) des Kontrastelements (212) sich beim Bewegen des Verriegelungselements (110) von der ersten Verriegelungsstellung (111) in die zweite Verriegelungsstellung (112) zwischen die Kontrastminderungsfläche (215) und das Erkennungsmerkmal (200) bewegt, so dass das Erkennungsmerkmal (200) in der zweiten Verriegelungsstellung (112) erkennbar ist.

6. Sicherungsvorrichtung (100) nach Anspruch 4 oder 5,
wobei das Erkennungsmerkmal (200) einen Code mit Elementen in einer ersten Farbe und Elementen in einer zweiten Farbe umfasst;
wobei die Elemente in der ersten Farbe nicht erkennbar sind, wenn der Code über der Kontrastminderungsfläche (215) angeordnet ist.

7. Sicherungsvorrichtung (100) nach Anspruch 6,
wobei sowohl die Elemente in der ersten Farbe als auch die Elemente in der zweiten Farbe des Codes (200) erkennbar sind, wenn die Kontrastfläche (213) sich zwischen der Kontrastminderungsfläche (215) und dem Code (200) befindet.

8. Sicherungsvorrichtung (100) nach einem der vorstehenden Ansprüche,
wobei das Erkennungsmerkmal (200) einen Data Matrix Code, DMC umfasst.

9. Sicherungsvorrichtung (100) nach einem der vorstehenden Ansprüche,
wobei das Erkennungsmerkmal (200) erkennbar ist, wenn es sich über der Kontrastfläche (213) befindet.

10. Sicherungsvorrichtung (100) nach einem der vorstehenden Ansprüche,
wobei die Sicherungsvorrichtung (100) ausgebildet ist, eine Steckerpositions-Sicherung (CPA) zur Sicherung einer Verriegelung eines Steckergehäuses (400) an einem Gegen-Steckergehäuse (401) vorzunehmen.

11. Sicherungsvorrichtung (100) nach Anspruch 10, ferner umfassend:
ein Spannelement (300) zum Einspannen des Steckergehäuses (400) in das Gegen-Steckergehäuse (401), wobei das Spannelement (300) von einer offenen Spannelementstellung, in der das Steckergehäuse (400) in das Gegen-Steckergehäuse (401) einführbar ist, in eine geschlossene Spannelementstellung, in der das Steckergehäuse (400) elektrisch kontaktierend mit dem Gegen-Steckergehäuse (401) fixiert ist, bewegbar ist; und
wobei das Verriegelungselement (110) an dem Spannelement (300) angebracht ist und ausgebildet ist, das Spannelement (300) zu verriegeln oder zu entriegeln.

12. Sicherungsvorrichtung (100) nach Anspruch 11,
wobei das Verriegelungselement (110) in der geschlossenen Spannelementstellung von der ersten Verriegelungsstellung (111) in die zweite Verriegelungsstellung (112) bewegbar ist und ausgebildet ist, in der zweiten Verriegelungsstellung (112) das Spannelement (300) in der geschlossenen Spannelementstellung zu verriegeln, und in der ersten Verriegelungsstellung (111) das Spannelement (300) für eine Bewegung in die offene Spannelementstellung zu entriegeln.

13. Sicherungsvorrichtung (100) nach Anspruch 11 oder 12,
wobei das Erkennungsmerkmal (200) und das Kontrastelement (212) an dem Spannelement (300) angebracht sind; und
wobei eine Bewegung des Verriegelungselements (110) von der ersten Verriegelungsstellung (111) in die zweite Verriegelungsstellung (112) die Kontrastfläche (213) unter das Erkennungsmerkmal (200) schiebt, so dass das Erkennungsmerkmal (200) in der zweiten Verriegelungsstellung (112) erkennbar ist.
